# EUROPÄISCHE PATENTSCHRIFT

(11) **EP 1 913 299 B1**
(45) Veröffentlichungstag und Bekanntmachung des Hinweises auf die Patenterteilung: **14.09.2016**
(21) Anmeldenummer: 06776672.5
(22) Anmeldetag: 08.08.2006
(51) Int. Cl.: F16L 33/18

(54) **VORRICHTUNG UND VERFAHREN ZUM ANSCHLUSS EINES HYDRAULIKSCHLAUCHS AN EINEN ANSCHLUSSNIPPEL**
DEVICE AND METHOD FOR CONNECTING A HYDRAULIC HOSE TO A CONNECTING NIPPLE
DISPOSITIF ET PROCEDE POUR RACCORDER UN FLEXIBLE HYDRAULIQUE A UN MAMELON DE RACCORDEMENT

(30) Priorität: 13.08.2005 DE 102005038476
(43) Veröffentlichungstag der Anmeldung: 23.04.2008
(73) Patentinhaber: Eaton Industrial IP GmbH & Co. KG, 12529 Schönefeld (DE)
(72) Erfinder: SCHERER, Eric, 76470 Ötigheim (DE); ERNST, Peter, 77836 Rheinmünster-Stoffhofen (DE); SCHMIDT, Jürgen, 76437 Rastatt (DE)
(74) Vertreter: Eaton IP Group EMEA
(86) Internationale Anmeldenummer: PCT/EP2006/007833
(87) Internationale Veröffentlichungsnummer: WO 2007/019989

(56) Entgegenhaltungen:
- DE-C1- 10 010 573
- DE-U1- 8 813 089
- GB-A- 2 273 537
- US-A- 2 453 997

## Beschreibung

Die Erfindung betrifft einen Hydraulikschlauchanschluss und ein Anschlussverfahren für diesen.

Hydraulikschläuche dienen z.B. an Erdbewegungsmaschinen oder anderen technischen Einrichtung und Anlagen zur Leitung von Hydrauliköl oder anderweitigen Hydraulikfluiden unter hohem Druck. Die Hydraulikschläuche widerstehen diesem Druck und sind flexibel. Eine gewisse Problematik stellt dabei der Anschluss solcher Hydraulikschläuche an Pumpen, Hydraulikmotoren oder sonstige Aggregate dar. Dazu werden die Hydraulikschläuche an ihren Enden mit Anschlussnippeln, beispielsweise aus Stahl versehen, die mit entsprechenden Anschlüssen der anzuschließenden Aggregate verschraubbar oder anderweitig verbindbar sind. Die Verbindungsstelle zwischen dem Anschlussnippel und dem Hydraulikschlauch muss dauerhaft dicht sein. Dazu weist der Anschlussnippel in der Regel einen rohrförmigen, sich einige Zentimeter in den Hydraulikschlauch hinein erstreckenden Fortsatz auf, auf dem der Hydraulikschlauch sitzt. Zur Befestigung ist auf den Hydraulikschlauch außen eine Fassung aufgepresst, die den Hydraulikschlauch radial nach innen gegen den Fortsatz des Anschlussnippels klemmt und die selbst an dem Anschlussnippel axial gesichert ist.

Zur abgedichteten Verbindung von Wasserleitungen offenbart die GB 2 273 537 einen Dichtungsring, der zwischen zwei konzentrisch ineinander gesteckte Rohrenden eingefügt ist. Der Ring ist in Wasser quellfähig und dichtet dadurch die Rohrverbindung ab.

Weiter ist aus der WO 2004/016979 A1 ein Schlauchanschluss bekannt, bei dem ein auf einem Nippel sitzender Schlauch durch eine Presshülse gehalten ist. Der Schlauch ist z.B. als Brennstoffleitung oder als Hydraulikschlauch vorgesehen. Die Presshülse weist ringförmige Zähne oder Rippen auf, die von außen in den Schlauch schneiden. Weitere Rippen der Presshülse hintergreifen einen Radialflansch des Nippels, um eine axiale Sicherung zu bilden. Der Schlauch weist ein Innenrohr z.B. aus PTFE auf. In einer Nut des Nippels sitzt ein O-Ring als Dichtung.

Weiter ist aus dem Gebrauchsmuster DE 88 13 089 U1 eine Schlauch/Nippel-Verbindung bekannt, bei der sich eine Schraub- oder Presshülse axial über den Schlauch erstreckt. Der Nippel weist eine Ringnut auf, in der ein Dichtring sitzt. Das Volumen der Ringnut ist größer als das Volumen des Dichtrings. Dieser besteht aus einem in Hydraulikflüssigkeit quellfähigen Material.

Außerdem ist aus der US 2 453 997 eine Schlauch/Nippel-Verbindung bekannt, bei der eine Dichtungshülse aus quellfähigem Material in einer passenden flachen Nut eines Nippels angeordnet ist. Mit einer Presshülse ist ein Fluidschlauch auf dem Nippel so gesichert, dass der Schlauch insbesondere im Bereich der Dichtungshülse radial komprimiert ist. Quillt die Dichtungshülse, Verstärkt sich die Abdichtung.

Bei sehr hohen Betriebsdrücken von z.B. bis zu 400 bar und dem vierfachen Berstdruck (1.600 bar) kann es gelegentlich vorkommen, dass an dem Anschlussnippel Ölleckagen auftreten. Aufgrund von wiederholten Lastspielen und Temperatureinflüssen kann sich das Elastomermaterial des Hydraulikschlauchs etwas setzen, wodurch dann möglicherweise Spalten entstehen.

Es ist Aufgabe der Erfindung, einen dauerhaft dichten Hydraulikschlauchanschluss zu schaffen, der für besonders hohe Betriebsdrücke geeignet ist.

Diese Aufgabe löst der Hydraulikanschluss nach Anspruch 1.

Der erfindungsgemäßen Hydraulikschlauchanschluss weist einen Anschlussnippel auf, der zur Aufnahme des Hydraulikschlauchs eingerichtet ist. Zwischen dem Anschlussnippel und dem Hydraulikschlauch ist wenigstens ein Quellelement angeordnet, das in dem Hydraulikfluid quellfähig ist. Sollte sich eine Leckage anbahnen und somit Hydraulikfluid zunächst bis zu dem Quellelement vordringen nimmt dessen Volumen zu, so dass es den sich auftuenden Spalt wirksam versperrt. Nach außen hin bleibt der Hydraulikanschluss deshalb auch dann dicht, wenn Alterungseinflüsse in Folge von Lastwechseln oder Temperatureinflüssen in gleich gelagerten, ähnlichen Fällen ohne Quellelement eine Leckage hervorrufen würden. Der Austritt von Hydraulikfluid, z.B. Hydrauliköl, wird somit wirksam verhindert. Sonst gelegentlich zu beobachtende äußere Hydraulikölfilme und daraus resultierende Verschmutzungen entfallen.

Das Quellelement ist vorzugsweise als geschlossener Ring ausgebildet, der um den Außenumfang des Anschlussnippels herum angeordnet ist. Somit wird der gesamte Umfang des Anschlussnippels abgedichtet. Als Quellelement kann beispielsweise ein O-Ring verwendet werden. Alternativ kann das ringförmige Quellelement einen abweichenden Querschnitt, z.B. einen mehreckigen, z.B. viereckigen Querschnitt, aufweisen. Vorzugsweise besteht es aus einem elastischen Material, das insbesondere das Einsetzen des Quellelements in einen entsprechenden Aufnahmeraum, beispielsweise in Form einer Ringnut oder Ringsicke erleichtert. Das Quellelement kann aus einem geeigneten Gummi, z.B. Naturgummi oder synthetischem Gummi, aus einem Elastomer, wie EPM oder EPDM, bestehen. Jedenfalls ist das Material des Quellelements so ausgewählt, dass es unter dem Einfluss des Hydraulikfluids wenigstens etwas quillt, d.h. im Volumen zunimmt. Vorzugsweise werden Materialien ausgewählt, die langsam quellen. Beim Quellen dringt Hydraulikfluid in die Matrix des Quellelements vor. Es wird bevorzugt, für das Quellelement Materialien zu verwenden, bei denen dieser Prozess langsam abläuft.

Das Quellelement ist vorzugsweise in einer Zone angeordnet, in der der Hydraulikschlauch flächig an dem Anschlussnippel anliegt. Somit wird dem durch diese Fuge vordringenden Hydraulikfluid seitens des Quellelements nur eine sehr geringe Fläche entgegen gesetzt. An der drucklosen Seite ist die Spaltfläche näherungsweise Null. Das Quellelement ist somit, obwohl es von dem Hydraulikfluid zumindest sehr langsam durchwandert werden kann, im Wesentlichen diffusionsdicht.

Die Ringnut zur Aufnahme des Quellelements weist vorzugsweise einen Querschnitt auf, der dem Querschnitt des Quellelements angepasst wird. Auf diese Weise wird jede volumenzunahme des Quellelements in Folge der auftretenden Quellung in eine erhöhte Pressung gegen den Hydraulikschlauch umgesetzt. Das Quellelement liegt dazu vorzugsweise direkt und unmittelbar an dem Hydraulikschlauch an und verformt diesen radial nach außen, wenn es quillt.

Vorzugsweise ist der Hydraulikschlauch insbesondere im Bereich des Quellelements außen von einer Fassung in Form einer Hülse übergriffen, die ein Ausweichen des Hydraulikschlauchs nach außen verhindert. Auf diese Weise wird auch dann dauerhafte Dichtheit sichergestellt, wenn das Material des Hydraulikschlauchs eine erhebliche Alterung aufweist.

Vorzugsweise wird das Quellelement trocken in den Anschlussnippel eingebaut, d.h. in einem Zustand, in dem sein Volumen minimal ist. Somit wird jede durch die Quellung bewirkte Volumenzunahme zur Erzielung einer Dichtwirkung genutzt. Als Quellelement wird vorzugsweise ein Dichtungselement und wiederum vorzugsweise ein handelsübliches Dichtungselement verwendet, wie beispielsweise ein O-Ring. Dessen Material wird vorzugsweise so ausgewählt, dass es gegen das Hydraulikfluid wenigstens insoweit unbeständig ist, dass es unter dem Einfluss des Hydraulikfluids zumindest aufquillt. Dabei ist es auch möglich, dass sich das Quellelement zumindest teilweise auflöst. Es wird jedoch bevorzugt, das Material des Quellelements so auszuwählen, dass sich das Quellelement unter dem Einfluss des Hydraulikfluids nicht auflöst sondern lediglich quillt. Beispielsweise eignet sich dazu im Hinblick auf die meisten verwendeten Hydraulikfluide EPDM.

Weitere Einzelheiten vorteilhafter Ausführungsformen der Erfindung ergeben sich aus der Zeichnung, der Beschreibung und aus Ansprüchen.

In der Zeichnung ist ein Ausführungsbeispiel der Erfindung veranschaulicht. Es zeigen:
- Figur 1: einen Hydraulikanschluss in teilweise geschnittener, perspektivischer Darstellung,
- Figur 2: einen Anschlussnippel mit Quellelement in schematischer, längs geschnittener, ausschnittsweiser Darstellung,
- Figur 3: den Anschlussnippel nach Figur 2 mit darauf sitzendem Hydraulikschlauch in ausschnittsweiser, längs geschnittener Darstellung und
- Figur 4: die Anordnung nach Figur 3 mit teilweise gequollenem Quellelement.

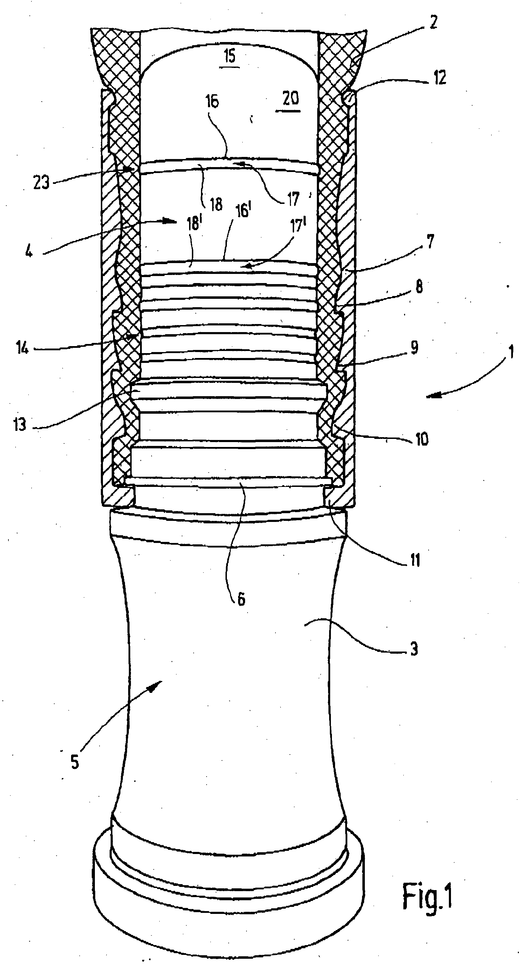

In Figur 1 ist ein Hydraulikschlauchanschluss 1 veranschaulicht. Zu diesem gehört ein Hydraulikschlauch 2, beispielsweise in Form eines flexiblen gewebeverstärkten, druckfesten Elastomerschlauchs. Er weist innen und außen eine glatte, in unverformtem Zustand zylindrische Wandung auf und ist gegen das zu führende Hydraulikfluid beständig. Dazu besteht er entweder vollständig aus entsprechend beständigem Material oder ist zumindest an seiner Innenseite damit ausgekleidet.

Zur Fassung des Schlauchs dient ein Anschlussnippel 3, der einen rohrförmigen Fortsatz 4 zur Aufnahme des Hydraulikschlauchs 2 aufweist. An den Fortsatz 4 schließt sich ein Sockel 5 an, der als Steckverbinder, als Schraubverbinder, mit einem Flansch oder ähnlichem ausgebildet bzw. versehen sein kann oder der Teil eines größeren Aggregats, beispielsweise einer Pumpe, eines Kühlers, eines Dämpfers oder dergleichen ist. An dem Fortsatz 4 ist eine ringförmige Rippe 6 ausgebildet, die als Widerlager zur Halterung einer den Hydraulikschlauch 2 gegen den Fortsatz 4 pressenden Fassung 7 dient. Die Fassung 7 weist die Form einer Hülse auf, die innen profiliert ist. Sie weist z.B. mehrere Halterippen 8, 9, 10 mit sägezahnförmigem Querschnitt auf. Außerdem weist die Fassung 7 einen nach innen gerichteten Flansch 11 auf, mit dem sie hinter die Rippe 6 greift, um sich in Axialrichtung abzustützen. An ihrem gegenüber liegenden Ende weist die Fassung 7 eine weitere, nach innen gerichtete Rippe 12 auf, die den Hydraulikschlauch 2 gegen den Fortsatz 4 presst.

Der Fortsatz 4 weist eine Außenumfangsfläche auf, die mit mehreren ringförmigen Strukturen profiliert ist. Zu den ringförmigen Strukturen gehört beispielsweise eine Ringrippe 13, die zwischen die beiden Halterippen 9, 10 greift. An der ansonsten im Wesentlichen zylindrischen Außenfläche können weitere, der axialen Sicherung des Schlauchs dienende Ringnuten 14, beispielsweise mit sägezahnförmigem Profil, vorgesehen sein.

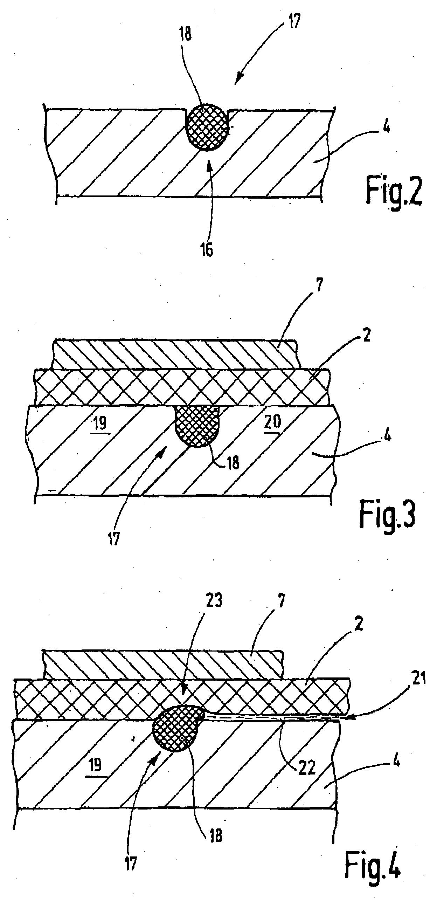

Der Fortsatz 4 ist vorzugsweise in der Nähe seines Schlauchinneren vorderen freien Endes 15 mit einer Ringnut 16 versehen, in der ein Quellelement 17 sitzt. Diese Einzelheit ist insbesondere in Figur 2 im Längsschnitt verdeutlichend veranschaulicht.

Figur 2 veranschaulicht einen Ausschnitt aus der Wandung des rohrförmigen Fortsatzes 4. Wie ersichtlich, ist die Ringnut 16 mit einem runden Boden versehen, an den sich das Quellelement 17 zumindest näherungsweise spaltfrei anlegt. Z.B. weist die Ringnut 16 gerade Nutflanken auf, die in einen im Längsschnitt halbkreisförmigen Boden übergehen. Die Ringnut 16 ist dabei so tief, dass der weitaus größte Teil des Quellelements 17 von der Ringnut 16 aufgenommen ist und lediglich ein kleiner Abschnitt des Quellelements 17 aus der Ringnut 16 heraus ragt. Als Quellelement 17 wird im vorliegenden Ausführungsbeispiel ein sonst als Dichtung vorgesehener O-Ring 18 verwendet, der einen nahtlosen kreisförmigen Ring bildet und dessen Körper einen aus Figur 2 ersichtlichen kreisförmigen Querschnitt aufweist. Der O-Ring 18 ist vorzugsweise aus EPDM ausgebildet, das in den meisten verwendeten Hydraulikfluiden quellfähig ist. Der O-Ring 18 ist sowohl in nicht gequollenem als auch in gequollenem Zustand elastisch.

Figur 3 veranschaulicht den eingebauten Zustand des Hydraulikschlauchs 2. Die Fassung 17 ist fest gegen den Fortsatz 4 gepresst, wodurch der Hydraulikschlauch 2 unverrückbar eingeklemmt ist. Durch die aus den Figuren 2 bis 4 nicht weiter ersichtliche Profilierung des Fortsatzes 4 wie auch durch die Innenprofilierung der Fassung 7 ist der Hydraulikschlauch 2 axial gesichert. Der Hydraulikschlauch 2 liegt dabei mit seiner inneren Wandung flächenhaft an dem Fortsatz 4 an. Dies gilt für beide, in Figur 3 veranschaulichte Seiten 19, 20 des O-Rings 18. Mit anderen Worten, sowohl auf der in Figur 1 oberhalb des O-Rings 18 gelegenen Seite 20 als auch auf der in Figur 1 unterhalb des O-Rings gelegenen Seite 19 ist eine Fuge vorhanden, bei der eine feste Anlage zwischen dem Hydraulikschlauch 2 und dem Fortsatz 4 gegeben ist. Die Fuge 20 ist normalerweise dicht, so dass kein Hydraulikfluid bis zu dem O-Ring 18 vordringt. Der O-Ring 18 liegt somit, wie in Figur 3 veranschaulicht, in nicht gequollenem Zustand einerseits in der Ringnut 16 und andererseits an der inneren Wandung des Hydraulikschlauchs 2 an.

In Folge des Betriebsdrucks von z.B. bis zu 400 bar, in Folge von Materialalterungen, -setzungen oder -schwindungen, in Folge von Temperaturänderungen und/oder Vibrationen ist jedoch nicht auszuschließen, dass Hydraulikfluid 21 in den zwischen dem Hydraulikschlauch 2 und dem Fortsatz 4 gebildeten Spalt 22 vordringt, wie Figur 4 veranschaulicht. Das Hydraulikfluid 21 gelangt auf diese Weise zumindest bis zu dem O-Ring 18. Dieser besteht vorzugsweise aus EPDM oder aus einem anderen geeigneten Material, das bei Kontakt mit dem Hydraulikfluid 21 quillt. Bevorzugt wird ein räumlich vernetztes Material, in dessen Matrix Moleküle des Hydraulikfluids 21 eingelagert werden können, d.h. in dessen Matrix sich das Hydraulikfluid 21 lösen kann. Durch die Einlagerung von Molekülen des Hydraulikfluids 21 in die Matrix des O-Rings 18 quillt dieser, d.h. sein Volumen nimmt zu. Dies bewirkt zum Einen schlicht das Absperren des sich auftuenden Spalts 22 und zum anderen, wie Figur 4 veranschaulicht, eine zusätzliche Kompression des Hydraulikschlauchs außen in einer Zone 23. Während die Fassung 7 einen radial nach innen gerichteten Druck auf den Hydraulikschlauch 2 ausübt, um diesen gegen den Fortsatz 4 zu klemmen, erzeugt das Quellelement 18 in der ringförmigen Zone 23 einen radial nach außen gerichteten Druck. Der Spalt 22 wird dadurch wirksam abgedichtet. Die Abdichtung bleibt durch die vorhandene Quellfähigkeit des O-Rings 18 auch dann bestehen, wenn sich der Spalt 22 vergrößern sollte. Das Quellelement 17 ist so bemessen, dass seine Quellfähigkeit jede zu erwartende Schwindung oder Setzung des Hyraulikschlauchmaterials übersteigt.

An seiner der Seite 19 zugewandten Flanke liegt der O-Ring 18 an einer Trennfuge zwischen dem Hydraulikschlauch 2 und dem Fortsatz 4, die nicht spaltweit offensteht, sondern vielmehr die radiale Ausdehnung Null hat. Deshalb kann der O-Ring 18, auch wenn seine Matrix mit Hydraulikfluid gefüllt ist, kein Hydraulikfluid an diesen Spalt abgeben. Das Quellelement 17 in Form des O-Rings 18 wirkt somit gegen das Hydraulikfluid 21 abdichtend, obwohl es aus einem Material besteht, das gegen das Hydraulikfluid 21 eigentlich nicht beständig ist.

Der Anschlussnippel 3 weist, wie beschrieben, wenigstens einen O-Ring 18 mit den vorbeschriebenen Eigenschaften auf. Es wird jedoch bevorzugt, wenigstens einen weiteren solchen O-Ring 18' vorzusehen, der in einer entsprechenden Ringnut 16' sitzt. Das so gebildete weitere Quellelement 17' kann dazu dienen, letzte Leckagen, die der O-Ring 16 noch durchlassen könnte, aufzufangen und auch dann noch zu arbeiten, wenn der O-Ring 18 mechanisch beschädigt worden sein sollte. Auch der O-Ring 18' besteht aus einem in Hydraulikfluid etwas quellfähigem Material. Für beide O-Ringe 18, 18' gilt jedoch, dass das Material so gewählt ist, dass es zwar etwas aufquellen, sich aber nicht vollständig im Hydraulikfluid auflösen kann.

Bedarfsweise können weitere quellfähige O-Ringe oder sonstige entsprechende, vorzugsweise geschlossen ringförmige Quellelemente vorgesehen sein, die in einem gewissen Abstand zu den O-Ringen 18, 18' angeordnet sind. Die Quellelemente 17, 17' bzw. O-Ringe 18, 18' sind dabei vorzugsweise in voneinander beabstandeten, in ihrer Form an die O-Ringe oder sonstigen Quellelemente 17, 17' angepassten Nuten angeordnet. Alternativ können auch mehrere Quellelemente 17, 17' in einem gemeinsamen Aufnahmeraum, beispielsweise einer gemeinsamen entsprechend breiten Nut untergebracht sein. Die in Figur 1 veranschaulichte Variante mit getrennten und beabstandeten Ringnuten 16, 16' wird jedoch bevorzugt. Die für das Quellelement 17 gegebene Beschreibung gilt im Übrigen entsprechend für das Quellelement 17'.

Der vorgestellte Hydraulikschlauchanschluss ist auch bei sehr hohen Betriebsdrücken und widrigen Einsatzbedingungen, wie pulsierenden Lasten, starken Temperaturwechseln und starken mechanischen Belastungen dauerhaft dicht.

Ein Hydraulikschlauchanschluss 1 weist einen Anschlussnippel, vorzugsweise aus Stahl oder einem anderen Metall auf, auf dessen rohrförmigen Fortsatz 4 ein Hydraulikschlauch 2 mittels einer Fassung 7 verpresst gehalten ist. Zwischen dem Fortsatz 4 und dem Hydraulikschlauch 2 ist ein Quellelement 17 angeordnet, das in dem Hydraulikfluid quellfähig ist. Sollte Hydraulikfluid bis zu dem Quellelement vordringen, quillt dieses auf und versperrt dem Hydraulikfluid im Weiteren den Weg. Außerdem verformt es, indem es aufquillt, den Hydraulikschlauch 2 radial nach außen. Der Hydraulikschlauch 2 ist in diesem Bereich von einer Fassung 7 in Form einer Metallhülse gefasst, so dass er nicht ausweichen kann. Auf diese Weise wird in einer ringförmigen Zone 23 der Pressdruck auf den Hydraulikschlauch 2 erhöht. Es wird dauerhafte Dichtheit erreicht.

## Patentansprüche

1. Hydraulikschlauchanschluss (1)
mit einem Anschlussnippel (3),
mit einem Hydraulikschlauch (2) zur Aufnahme und Leitung eines Hydraulikfluids (21) und
mit wenigstens einem Quellelement (17), das zwischen dem Anschlussnippel (3) und dem Hydraulikschlauch (2) angeordnet und das in dem Hydraulikfluid quellfähig ist
wobei der Anschlussnippel (3) eine radial offene Ringnut (16) zur Aufnahme des Quellelementes (17) aufweist,
**dadurch gekennzeichnet, dass**
der Querschnitt des Quellelements (17) in nicht-gequollenem Zustand größer ist als der Querschnitt der Ringnut (16).

2. Hydraulikschlauchanschluss nach Anspruch 1, **dadurch gekennzeichnet, dass** das Quellelement (17) als geschlossener Ring ausgebildet ist.

3. Hydraulikschlauchanschluss nach Anspruch 1, **dadurch gekennzeichnet, dass** das Quellelement (17) um den Anschlussnippel (3) herumführend angeordnet ist.

4. Hydraulikschlauchanschluss nach Anspruch 1, **dadurch gekennzeichnet, dass** das Quellelement (17) ein O-Ring ist.

5. Hydraulikschlauchanschluss nach Anspruch 1, **dadurch gekennzeichnet, dass** das Quellelement (17) einen mehreckigen Querschnitt aufweist.

6. Hydraulikschlauchanschluss nach Anspruch 1, **dadurch gekennzeichnet, dass** das Quellelement (17) aus einem Elastomer besteht.

7. Hydraulikschlauchanschluss nach Anspruch 1, **dadurch gekennzeichnet, dass** das Quellelement (17) aus einem elastischen Material gesteht.

8. Hydraulikschlauchanschluss nach Anspruch 1, **dadurch gekennzeichnet, dass** das Quellelement (17) aus einem Gummi besteht.

9. Hydraulikschlauchanschluss nach Anspruch 1, **dadurch gekennzeichnet, dass** das Quellelement (17) aus EPDM besteht.

10. Hydraulikschlauchanschluss nach Anspruch 1, **dadurch gekennzeichnet, dass** das Quellelement (17) aus EPM besteht.

11. Hydraulikschlauchanschluss nach Anspruch 1, **dadurch gekennzeichnet, dass** das Quellelement (17) in unmittelbarer Anlage mit dem Hydraulikschlauch (2) angeordnet ist.

12. Hydraulikschlauchanschluss nach Anspruch 1, **dadurch gekennzeichnet, dass** der Hydraulikschlauch (2) gegen das Quellelement (17) gepresst ist.

13. Hydraulikschlauchanschluss nach Anspruch 1, **dadurch gekennzeichnet, dass** dem Anschlussnippel (3) eine Fassung (7) in Form einer den Hydraulikschlauch (2) übergreifenden Hülse zugeordnet ist, die mit dem Hydraulikschlauch (2) verpresst ist.

14. Hydraulikschlauchanschluss nach Anspruch 13, **dadurch gekennzeichnet, dass** die Fassung (17) an dem Anschlussnippel (3) gesichert ist.

## Claims

1. Hydraulic hose connection (1) comprising:
a connecting nipple (3),
a hydraulic hose (2) for accommodating and transporting a hydraulic fluid (21), and
at least one swelling element (17) that is arranged between the connecting nipple (3) and the hydraulic hose (2), and that is swellable in the hydraulic fluid,
the connecting nipple (3) having an annular groove (16) that is open in the radial direction for accommodating the swelling element (17),
**characterised in that**
the cross-section of the swelling element (17) in the non-swollen state is greater than the cross-section of the annular groove (16).

2. Hydraulic hose connection according to Claim 1, **characterised in that** the swelling element (17) is configured as a closed ring.

3. Hydraulic hose connection according to Claim 1, **characterised in that** the swelling element (17) is arranged so as to extend around the connecting nipple (3).

4. Hydraulic hose connection according to Claim 1, **characterised in that** the swelling element (17) is an 0-ring.

5. Hydraulic hose connection according to Claim 1, **characterised in that** the swelling element (17) has a polygonal cross-section.

6. Hydraulic hose connection according to Claim 1, **characterised in that** the swelling element (17) consists of an elastomer.

7. Hydraulic hose connection according to Claim 1, **characterised in that** the swelling element (17) consists of an elastic material.

8. Hydraulic hose connection according to Claim 1, **characterised in that** the swelling element (17) consists of a rubber.

9. Hydraulic hose connection according to Claim 1, **characterised in that** the swelling element (17) consists of EPDM.

10. Hydraulic hose connection according to Claim 1, **characterised in that** the swelling element (17) consists of EPM.

11. Hydraulic hose connection according to Claim 1, **characterised in that** the swelling element (17) is arranged in direct abutment with the hydraulic hose (2).

12. Hydraulic hose connection according to Claim 1, **characterised in that** the hydraulic hose (2) is pressed against the swelling element (17).

13. Hydraulic hose connection according to Claim 1, **characterised in that** the connecting nipple (3) is associated with a fitting (7) in the form of a sleeve that engages over the hydraulic hose (2), said sleeve being pressed together with the hydraulic hose (2).

14. Hydraulic hose connection according to Claim 13, **characterised in that** the fitting (17) is secured to the connecting nipple (3).

## Revendications

1. Raccord de tuyau hydraulique (1)
avec un raccord fileté (3),
avec un tuyau hydraulique (2) pour recevoir et conduire un fluide hydraulique (21) et
avec au moins un élément susceptible de gonfler (17) qui est agencé entre le raccord fileté (3) et le tuyau hydraulique (2) et qui est susceptible de gonfler dans le fluide hydraulique,
le raccord fileté (3) comportant une rainure annulaire (16), ouverte radialement, pour recevoir l'élément susceptible de gonfler (17),
**caractérisé en ce que**
la section transversale de l'élément susceptible de gonfler (17) à l'état non gonflé est plus grande que la section transversale de la rainure annulaire (16).

2. Raccord de tuyau hydraulique selon la revendication 1, **caractérisé en ce que** l'élément susceptible de gonfler (17) est conçu comme un anneau fermé.

3. Raccord de tuyau hydraulique selon la revendication 1, **caractérisé en ce que** l'élément susceptible de gonfler (17) est agencé autour du raccord fileté (3).

4. Raccord de tuyau hydraulique selon la revendication 1, **caractérisé en ce que** l'élément susceptible de gonfler (17) est un joint torique d'étanchéité.

5. Raccord de tuyau hydraulique selon la revendication 1, **caractérisé en ce que** l'élément susceptible de gonfler (17) a une section transversale polygonale.

6. Raccord de tuyau hydraulique selon la revendication 1, **caractérisé en ce que** l'élément susceptible de gonfler (17) est en élastomère.

7. Raccord de tuyau hydraulique selon la revendication 1, **caractérisé en ce que** l'élément susceptible de gonfler (17) est en un matériau élastique.

8. Raccord de tuyau hydraulique selon la revendication 1, **caractérisé en ce que** l'élément susceptible de gonfler (17) est en caoutchouc.

9. Raccord de tuyau hydraulique selon la revendication 1, **caractérisé en ce que** l'élément susceptible de gonfler (17) est en EPDM.

10. Raccord de tuyau hydraulique selon la revendication 1, **caractérisé en ce que** l'élément susceptible de gonfler (17) est en EPM.

11. Raccord de tuyau hydraulique selon la revendication 1, **caractérisé en ce que** l'élément susceptible de gonfler (17) est agencé au contact direct avec le tuyau hydraulique (2).

12. Raccord de tuyau hydraulique selon la revendication 1, **caractérisé en ce que** le tuyau hydraulique (2) est poussé contre l'élément susceptible de gonfler (17).

13. Raccord de tuyau hydraulique selon la revendication 1, **caractérisé en ce qu'**il est associé au raccord fileté (3) une douille (7) sous la forme d'un manchon qui passe par-dessus le tuyau hydraulique (2) et qui est pressé avec le tuyau hydraulique (2).

14. Raccord de tuyau hydraulique selon la revendication 13, **caractérisé en ce que** la douille (17) est bloquée sur le raccord fileté (3).
